# EUROPEAN PATENT SPECIFICATION

(11) **EP 1 832 173 B1**
(45) Date of publication and mention of the grant of the patent: **17.02.2010**
(21) Application number: 07103468.0
(22) Date of filing: 05.03.2007
(51) Int. Cl.: A22B 5/00, A22C 17/00

(54) **Apparatus for automatic separation of meat and bone**
Vorrichtung zur automatischen Trennung von Fleisch und Knochen
Appareil de séparation automatique de viande et os

(30) Priority: 06.03.2006 DK 200600322
(43) Date of publication of application: 12.09.2007
(73) Proprietor: Slagteriernes Forskningsinstitut, 4000 Roskilde (DK)
(72) Inventor: Folkmann, Peter, 4140 Borup (DK); Møller, Helge, 2920 Charlottenlund (DK)

(56) References cited:
- EP-A2- 1 059 037
- WO-A-2005/110105
- DE-C1- 10 222 754
- US-A1- 2002 019 208
- US-A1- 2003 008 608

## Description

The present invention relates to an apparatus for automatic separation of meat and bone at the spine of a part of a carcass, said apparatus comprising knives and an oblong transport device having gripping elements for gripping the carcass part at the spine and transporting the part passed the knives, while the spine is held by the gripping elements with the split-side abutting on mainly horizontal abutment faces on the gripping elements. A similar device is known from US 2002/0019208.

DK 172745 B1 (Slagteriernes Forskningsinstitut) discloses an apparatus and a method for automatic removal of a spine part from an anterior part of a carcass. The apparatus further comprises a linear conveyor for the spine of the anterior part. The apparatus further comprises a knife for separation of the meat of the anterior part from the spinous processes and the upper side of the spine. The knife is designed with a plane blade and a fin at the end of the blade.

DK 173412 B1 (Slagteriernes Forskningsinstitut) describes a conveyor for gripping and transporting a part of a carcass at the spine. The conveyor comprises a circulating chain of gripping elements, which transport the part in the longitudinal direction of the spine.

DK 173908 B1 (Slagteriernes Forskningsinstitut) describes a set of two knives for automatic separation of meat and bone in a middle part of a carcass. The knives are resiliently fixed and cut along the spine of the middle part, when it is lead past the knives. One of the knives, cutting along the transverse processes, has a plane portion with a side edge stretching in the direction of travel of the middle part, and from this side edge a curved portion emanates. The other knife has a foot cutting along the heads of the ribs. These knives can be prone to cutting into bones.

The object of the present invention is to provide an apparatus for automatic separation of meat and bone at the spine of a part of a carcass, whereby the risk of knives cutting into bones is reduced, while still cutting close to the bones.

The apparatus according to the invention is characterized in that it comprises two or more knife devices arranged opposite the transport device, and arranged after each other seen in the transport direction of the transport device, and that each knife device comprises a knife and a first activation means for moving the knife in a mainly horizontal direction towards the transport device during cutting, and back again, away from a region of operation, and second activation means for moving the knife in a mainly vertical direction of the abutment faces.

Advantageous embodiments of the apparatus according to the invention is recited in claim 2-10.

The first activation means and the second activation means in at least one knife device may for instance be arranged to move the knife in their respective directions mainly independently of each other.

The knife of at least one knife device can further be moved mainly independently of the movement of the knives of other knife devices.

One or more of the activation means can resiliently or elastically press the knife against the carcass part during cutting, so that the knife can be pressed back by a return force of the carcass part.

The first and second activation means of at least one knife device can each comprise an air cylinder or another resilient activation means, e.g. a motor unit with a spring, which during cutting presses the knife in direction towards the transport device and in direction up towards the abutment faces.

Each knife device can comprise a bracket, in which the knife is mounted in a movable way, so it can be moved towards the transport device and independently thereof can be moved up towards the abutment faces.

The apparatus may comprise a front edge detector for detection of the front end of the carcass part by the transport of the carcass part past the detector and a controller for controlling the function of the activation means in dependence on the detector signal and the transport progress.

The apparatus may further comprise a rib detector for detection of the last rib in a carcass part and a controller for controlling the function of the activation means in a knife device, which cut along the ribs, in dependence on the rib detector signal and the transport process.

The apparatus according to the invention can in an embodiment comprise a first knife with a cutting edge, which along a first part extends mainly vertically and at the base transform to a second, mainly horizontal part, and a second knife with a cutting edge extending obliquely downwards.

Further the apparatus may comprise a third knife, which curves, extends obliquely downwards and is longer than the second knife, and which preferably through the flexibility (resiliency) thereof can adopt to the ribs, e.g. in that the blade of the knife is thin and made of a resilient material. Preferably the blade curves more than the ribs so that the blade can straighten somewhat when it is pressed against the ribs. Thereby these are closely followed.

By the terms "mainly vertical" or "mainly horizontal" in the present text is to be understood directions, which can differ from true vertical and true horizontal by up to 30°.

The invention is described in more detail with reference to the drawing, in which
Fig. 1 shows parts of an apparatus according to the invention for separation of the spine and a part of the ribs from adjoining meat in a middle part,
Fig. 2 shows a knife device in the apparatus, and
Fig. 3 shows three knives and a detail of the transport arrangement of the apparatus.

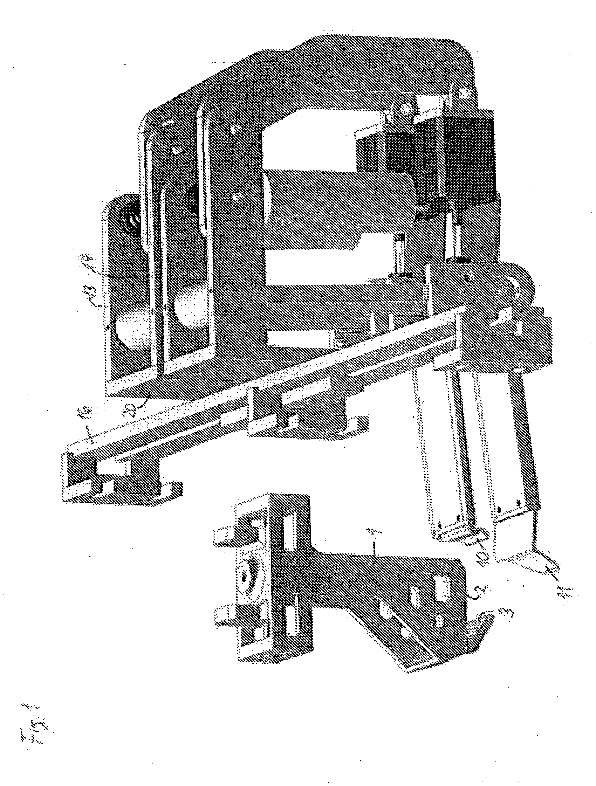

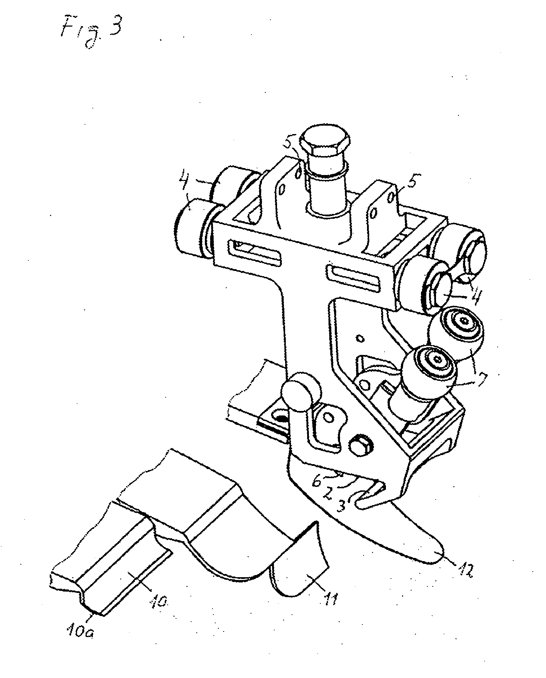

The apparatus for separation of meat and bone at the spine of a middle part comprises a conveyor having a plurality of gripping elements 1 (Fig. 1) for gripping and transporting a middle part by the spine. These elements are arranged side by side and connected, so that they form a circulating chain, which successively grip the spine and bring it to pressing abutment against horizontal abutment faces 2 for the split side of the spine and oblique abutment faces 3 for the side of the spine. After the middle part has been gripped in the whole length of the spine, the conveyor transports it past three knives 10, 11, 12 (Fig. 3) for separation of meat and bone. The knives are mounted in respective knife devices 13, 14, 15, of which only 13 and 14 can be seen on the drawing. Apart from different shapes of the knives, the knife devices are of the same design. The knife devices are mounted in a rack on a mounting beam 16 for the devices. The beam is extending along the conveyor i a suitable distance from it so that the knives can perform the cutting process on the middle part by the passage thereof passed the knives.

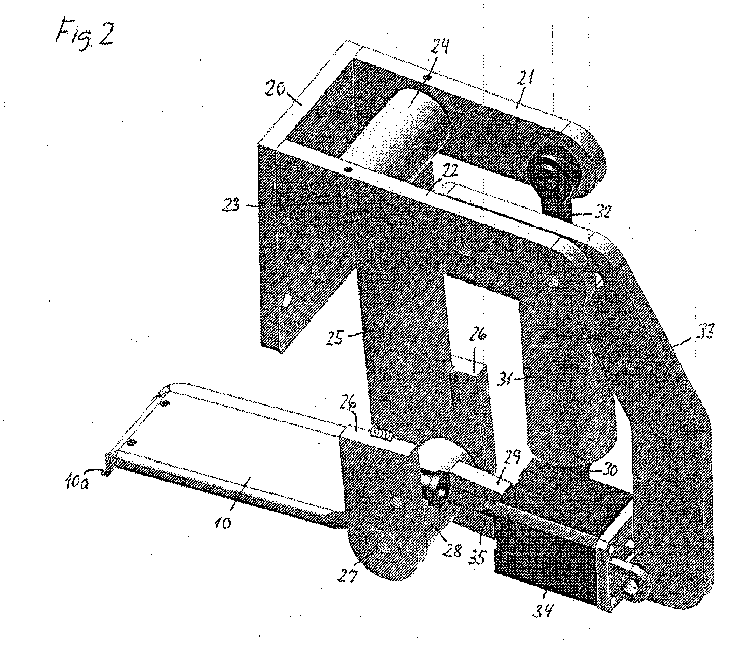

The construction of a knife device can be more clearly seen in Fig. 2. The device comprises a bracket 20, which is fastened to the beam 16. The bracket has two arms 21, 22 with a shaft bearing 23 for a shaft 24, which is attached to one end of an arm 25, which at the other end has two side plate parts 26 with bearings 27 for a second shaft 28, to which a knife 10 is fixed. The second shaft 28 has an arm 29, to which the free end of the piston rod 30 of a double air cylinder 31 is attached. The free end of the second piston rod 32 of the cylinder is attached to the first arm 21 of the bracket. By activation of one or both cylinders the cutting edge 10a of the knife 10 is moved upwards, as the knife swings about the second shaft 28. By the movement of the cutting edge 10a used during cutting, it is mainly a vertical (straight) movement of the cutting edge.

On the second arm 22 of the bracket the first end of an intermediate piece 33 is mounted. Between this intermediate piece and one side plate 26 on the arm 25 an air cylinder 34 is arranged, where the piston rod 35 of the cylinder 34 can move the cutting edge 10a forward in mainly horizontal (straight) direction during the cutting, as the arm 25 swings. By means of the cylinder 34 the knife 10 can be pulled completely away from the region of operation, when it is not needed.

The construction of the gripping elements, which are connected so that they form a chain in the conveyor for a middle part, can be seen most clearly in Fig. 3. An element 1 has four wheels 4 running in cut-outs on two rails extending in the transport direction of the conveyor, and which are connected to underlying return rails, so that the element runs in a circulating path. At the top the element has holes 5 for chain links connecting the element to the neighbour elements. At the bottom the element has a horizontal abutment face 2 for the splitting face of the spine and an oblique abutment face 3 for one side spine. The spine is pressed against these faces by means of a swingably mounted hook having a spike 6 which penetrate into the spine and firmly secure it to the element, when wheels 7, running on a control rod, is forced against the element, as the rod changes path. After termination of the process the rod changes path again, so the spike retracts and the spine is released.

The apparatus is adapted for separation of meat and bone in a middle part, where the spinous processes are cut free. The knife 10 in Fig. 3 is used for separation of meat and bone at the transverse processes. It performs a cut mainly at right angles to the splitting plane of the spine and a cut mainly in parallel with the splitting plane. The knife 11 cuts along the ribs at the heads of the ribs. Finally the knife 12 cuts along the ribs a little more distant from the heads of the ribs. The blade of the knife may have such a curvature and thickness, so that it will straighten somewhat when it is pressed against the ribs and thereby adapt to the shape of the ribs. By means of a process, which is not further disclosed here, a further separation of rib and rib can be carried out, as a knife is brought into a longitudinal cut, which is laid from the underside of the meat part or from the upper side through the ribs, and carry out a cutting from the other side between rib and meat. Hereby a separation of the loin meat from the loin ribs, which remain positioned in the conveyor with the spine. By sawing off the loin ribs at the spine the loin rib part can be separated from the spine, whereby a valuable loin rib product is achieved.

An example of control of the movement of the knives 10, 11, 12 will appear from the following:

The middle part is gripped by the gripping arrangement and transported fixedly at a steady speed towards the area with the knife 10, the knife 11 and the knife 12. A front edge detector detects when the front edge of the middle part passes and records this. A rib detector detects the last rib passing the detector, and similarly records this. After the middle part has moved a predetermined way from the front edge detector it reaches the knife 10. At this moment the compressed air cylinders in the knife device 13 is activated, so the knife 10 travels horizontally towards the gripping arrangement and vertically up towards the abutment faces 2, until the movements are stopped by the contact of the knife with bone parts in one or the other direction. The knife is now held resiliently pressed in/up against bone parts, while it cuts along the bones during the further transport of the middle part. When the front edge of the middle part reaches the knife 11 the knife device 14 is activated, so that the knife 11 goes in/up and carries out a cut along the bones in a way similar to the knife 10. When the front edge of the middle part reaches the knife 12 a vertical and horizontal air cylinder in the knife device is activated, so that the knife 12 goes in/up and starts to cut along the underside of the ribs, under influence of a resilient vertical force and a resilient horizontal force from the air cylinders. The effect of the vertical and horizontal forces from the cylinders is that the knives cut close to the bone. An extra close cut is effected by that the knives work independently of each other and each can follow their own path both vertically and horizontally without being influenced by the other knives. Hereby they avoid cutting into bone parts. Further the knives are adapted to be prone to follow the track of the preceding knife, whereby the risk of knives cutting into or away from the bone is reduced.

After knife 12 has entered completely under the loin ribs, the second cylinder of the double cylinder of the knife device 15 is activated, so that the knife 12 is pressed an extra approximately 5 mm up to cut free even closer.

Knife 10 and 11 remain activated until the middle part has passed all knives and are subsequently placed in the initial position. Knife 12 is deactivated and retracted as soon as it according to the recording of the rib detector has cut at the last rib. After the passage of the middle part the knife is put in initial position, ready to process a new middle part together with the two other knives.

By means of the apparatus it is possible to achieve very high meat yields by an automated boning process for middle parts or loin parts with spine and ribs.

## Claims

1. An apparatus for automatic separation of meat and bone at the spine of a part of a carcass, comprising knives (10, 11, 12) and an oblong transport device with gripping elements (1) for gripping the part at the spine and transporting it past the knives, **characterised in that** the spine is held by the gripping elements with the splitting face of the spine abutting on mainly horizontally arranged abutment faces (2) on the gripping elements, that the apparatus comprises two or more knife devices (13, 14, 15), which are placed opposite the transport arrangement and placed in succession seen in the transport direction of the transport arrangement, and that each knife device comprises a knife (10, 11 12) and a first activation means (34) for moving the knife in a mainly horizontal direction towards the transport arrangement during cutting, and back again, away from a region of operation, plus a second activation means (31) for moving the knife in a mainly vertical direction towards the abutment faces (2) during cutting.

2. An apparatus according to claim 1, **characterized in that** the first activation means (34) and the second activation means (31) in at least one knife device (13, 14, 15) is adapted for moving the knife in their respective directions mainly independently of each other.

3. An apparatus according to claim 1, **characterized in that** the knife (10, 11, 12) in at least one cutting means (13, 14, 15) is movable mainly independently of movement of knives in other cutting means.

4. An apparatus according to claim 1, **characterized in that** one or more of the activation means (34, 31) during cutting presses the knife (10, 11, 12) against the part in a resilient or elastic way.

5. An apparatus according to claim 1, **characterized in that** the first activation means (34) and the second activation means (31) in at least one cutting means (13, 14, 15) each comprise an air cylinder or another resilient activation means, which during cutting presses the knife respectively in a direction towards the transport arrangement and a direction up towards the abutment faces (2).

6. An apparatus according to claim 1, **characterized in that** each cutting means (13, 14, 15) comprises a bracket (20), in which the knife (10, 11, 12) is mounted in a movable way, so it can be moved towards the transport arrangement and independently thereof can be moved up towards the abutment faces (2).

7. An apparatus according to claim 1, **characterized in that** it comprises a front edge detector for detection of the front edge of the part by the transport of the part passed the detector by the transport arrangement, and a control device for control of the function of the activation means (31, 34) in dependence on signal of the detector and the transport process.

8. An apparatus according to claim 1, **characterized in that** it comprises a rib detector for detection of the last rib in a part, and a control device for control of the function of the activation means (31, 34) in a knife device, which cut along the ribs, in dependence of the signal of the rib detector and the transport process.

9. An apparatus according to claim 1, **characterized in that** it comprises a first knife (10) with a cutting edge (10a), which along a first part extends mainly vertically and at the base transforms to a second, mainly horizontal part, and a second knife (11) with a cutting edge extending obliquely downwards.

10. An apparatus according to claim 9, **characterized in that** it comprises a third knife (12), which curves, extends obliquely downwards and is longer that the second knife (11), and which preferentially through flexibility thereof can adapt to the ribs.

## Patentansprüche

1. Vorrichtung zur automatischen Trennung von Fleisch und Knochen an der Wirbelsäule eines Teils eines Schlachttierkörpers, umfassend Messer (10, 11, 12) und eine längliche Transporteinrichtung mit Greifelementen (1) zum Greifen des Teils an der Wirbelsäule und Transport desselben an den Messern vorbei, **dadurch gekennzeichnet, dass** die Wirbelsäule von den Greifelementen gehalten wird, wobei die Spaltfläche der Wirbelsäule an im Wesentlichen horizontal angeordneten Anlageflächen (2) an den Greifelementen anliegt, dass die Vorrichtung zwei oder mehr Messereinrichtungen (13, 14, 15) umfasst, die der Transportanordnung gegenüber platziert sind und, in der Transportrichtung der Transportanordnung gesehen, in Folge platziert sind, und dass jede Messereinrichtung ein Messer (10, 11, 12) und ein erstes Aktivierungsmittel (34) zum Bewegen des Messers während des Schneidens in einer im Wesentlichen horizontalen Richtung auf die Transportanordnung zu und wieder zurück, weg von einem Arbeitsbereich, sowie ein zweites Aktivierungsmittel (31) zum Bewegen des Messers während des Schneidens in einer im Wesentlichen vertikalen Richtung auf die Anlageflächen (2) zu umfasst.

2. Vorrichtung nach Anspruch 1, **dadurch gekennzeichnet, dass** das erste Aktivierungsmittel (34) und das zweite Aktivierungsmittel (31) in mindestens einer Messereinrichtung (13, 14, 15) eingerichtet ist, um das Messer in ihren jeweiligen Richtungen im Wesentlichen unabhängig von einander zu bewegen.

3. Vorrichtung nach Anspruch 1, **dadurch gekennzeichnet, dass** das Messer (10, 11, 12) in mindestens einem Schneidmittel (13, 14, 15) im Wesentlichen unabhängig von der Bewegung von Messern in anderen Schneidmitteln bewegbar ist.

4. Vorrichtung nach Anspruch 1, **dadurch gekennzeichnet, dass** ein oder mehrere der Aktivierungsmittel (34, 31) das Messer (10, 11, 12) während des Schneidens auf federnde oder elastische Weise gegen das Teil drücken.

5. Vorrichtung nach Anspruch 1, **dadurch gekennzeichnet, dass** das erste Aktivierungsmittel (34) und das zweite Aktivierungsmittel (31) in mindestens einem Schneidmittel (13, 14, 15) jeweils einen Luftzylinder oder ein anderes federndes Aktivierungsmittel aufweisen, das das Messer während des Schneidens in eine Richtung auf die Transportanordnung hin bzw. in eine Richtung nach oben auf die Anlageflächen (2) hin drückt.

6. Vorrichtung nach Anspruch 1, **dadurch gekennzeichnet, dass** jedes Schneidmittel (13, 14, 15) eine Klammer (20) umfasst, in der das Messer (10, 11, 12) auf bewegliche Weise gelagert ist, so dass es auf die Transportanordnung hin bewegt werden kann und unabhängig davon nach oben auf die Anlageflächen (2) hin bewegt werden kann.

7. Vorrichtung nach Anspruch 1, **dadurch gekennzeichnet, dass** sie einen Vorderranddetektor zur Erkennung des vorderen Randes des Teils durch den Transport des Teils durch die Transportanordnung an dem Detektor vorbei und eine Steuereinrichtung zur Steuerung der Funktion des Aktivierungsmittels (31, 34) abhängig vom Signal des Detektors und dem Transportvorgang umfasst.

8. Vorrichtung nach Anspruch 1, **dadurch gekennzeichnet, dass** sie einen Rippendetektor zur Erkennung der letzten Rippe in einem Teil und eine Steuereinrichtung zur Steuerung der Funktion des Aktivierungsmittels (31, 34) in einer Messereinrichtung, die die Rippen entlang schneidet, abhängig von dem Signal des Rippendetektors und dem Transportvorgang umfasst.

9. Vorrichtung nach Anspruch 1, **dadurch gekennzeichnet, dass** sie ein erstes Messer (10) mit einer Schneidkante (10a), die sich im Wesentlichen vertikal entlang einem ersten Teil erstreckt und an der Basis in einen zweiten, im Wesentlichen horizontalen Teil umgeformt wird, und ein zweites Messer (11) mit einer Schneidkante, die sich schräg nach unten erstreckt, umfasst.

10. Vorrichtung nach Anspruch 1, **dadurch gekennzeichnet, dass** sie ein drittes Messer (12) umfasst, das sich krümmt, sich schräg nach unten erstreckt und länger als das zweite Messer (11) ist, und das sich vorzugsweise durch seine Flexibilität an die Rippen anpassen kann.

## Revendications

1. Un appareil destiné à la séparation automatique de viande et d'os à l'emplacement de la colonne vertébrale d'une pièce d'une carcasse, comprenant des couteaux (10, 11, 12) et un dispositif de transport oblong ayant des éléments de préhension (1) destinés à saisir la pièce à l'emplacement de la colonne vertébrale et à la transporter devant les couteaux, **caractérisé en ce que** la colonne vertébrale est soutenue par les éléments de préhension de telle façon que le côté fendu de la colonne vertébrale vienne en butée sur des faces de butée (2) agencées de façon sensiblement horizontale sur les éléments de préhension, **en ce que** l'appareil comprend deux dispositifs de couteau (13, 14, 15) ou plus, placés à l'opposé de l'agencement de transport et placés les uns après les autres dans la direction du transport de l'agencement de transport, et **en ce que** chaque dispositif de couteau comprend un couteau (10, 11, 12) et un premier moyen d'activation (34) destiné à déplacer le couteau dans une direction sensiblement horizontale vers l'agencement de transport durant la coupe, puis dans la direction opposée à l'écart de la zone de traitement, et en outre un second moyen d'activation (31) destiné à déplacer le couteau dans une direction sensiblement verticale vers les faces de butée (2) durant la coupe.

2. Un appareil selon la revendication 1, **caractérisé en ce que** le premier moyen d'activation (34) et le second moyen d'activation (31) dans au moins l'un des dispositifs de couteau (13, 14, 15) sont conçus pour déplacer le couteau dans leur direction respective sensiblement indépendamment l'un de l'autre.

3. Un appareil selon la revendication 1, **caractérisé en ce que** le couteau (10, 11, 12) dans au moins l'un des dispositifs de coupe (13, 14, 15) est déplaçable de façon sensiblement indépendante du mouvement des couteaux de l'autre moyen de coupe.

4. Un appareil selon la revendication 1, **caractérisé en ce que** l'un des moyens d'activation ou plus (34, 31) presse le couteau (10, 11, 12) durant la coupe contre la pièce d'une façon résiliente ou élastique.

5. Un appareil selon la revendication 1, **caractérisé en ce que** le premier moyen d'activation (34) et le second moyen d'activation (31) dans au moins l'un des dispositifs de coupe (13, 14, 15) comprennent chacun un vérin pneumatique ou un autre moyen d'activation résilient, qui presse durant la coupe sur le couteau respectivement dans la direction de l'agencement de transport et vers le haut en direction des faces de butée (2).

6. Un appareil selon la revendication 1, **caractérisé en ce que** chaque moyen de coupe (13, 14, 15) comprend un support (20) dans lequel le couteau (10, 11, 12) est monté de façon à pouvoir être déplacé en direction de l'agencement de transport, et celui-ci pouvant être déplacé indépendamment vers le haut en direction des faces de butée (2).

7. Un appareil selon la revendication 1, **caractérisé en ce qu'**il comprend un détecteur de bord avant destiné à détecter le bord avant de la pièce lorsque la pièce est transportée devant le détecteur par l'agencement de transport, et un dispositif de commande destiné à commander le fonctionnement des moyens d'activation (31, 34) en fonction d'un signal du détecteur et du processus de transport.

8. Un appareil selon la revendication 1, **caractérisé en ce qu'**il comprend un détecteur de côte destiné à détecter la dernière côte d'une pièce, et un dispositif de commande destiné à commander le fonctionnement des moyens d'activation (31, 34) dans un dispositif de couteau qui coupe le long des côtes, en fonction d'un signal du détecteur de côte et du processus de transport.

9. Un appareil selon la revendication 1, **caractérisé en ce qu'**il comprend un premier couteau (10) ayant un bord de coupe (10a), qui s'étend le long d'une première partie de façon sensiblement verticale et se transforme à l'emplacement de la base en une seconde partie sensiblement horizontale, et un second couteau (11) ayant un bord de coupe s'étendant de façon oblique vers le bas.

10. Un appareil selon la revendication 9, **caractérisé en ce qu'**il comprend un troisième couteau (12) qui s'incurve, s'étend obliquement vers le bas, a une longueur supérieure à celle du second couteau (11), et peut de préférence s'adapter aux côtes grâce à sa souplesse.
